# EUROPÄISCHE PATENTSCHRIFT

(11) **EP 1 175 750 B1**
(45) Veröffentlichungstag und Bekanntmachung des Hinweises auf die Patenterteilung: **22.10.2003**
(21) Anmeldenummer: 00925071.3
(22) Anmeldetag: 07.04.2000
(51) Int. Cl.: H04L 9/32

(54) **SIGNIERUNG UND SIGNATURPRÜFUNG VON NACHRICHTEN**
SIGNING AND SIGNATURE AUTHENTICATION OF MESSAGES
SIGNATURE ET VERIFICATION DE SIGNATURE DE MESSAGES

(30) Priorität: 30.04.1999 DE 19919909
(43) Veröffentlichungstag der Anmeldung: 30.01.2002
(73) Patentinhaber: Wincor Nixdorf International GmbH, 33106 Paderborn (DE)
(72) Erfinder: NOLTE, Michael, D-33034 Brakel (DE)
(86) Internationale Anmeldenummer: DE0001086
(87) Internationale Veröffentlichungsnummer: WO00067422

(56) Entgegenhaltungen:
- EP-A- 0 077 238
- WO-A-93/21711

## Beschreibung

### Technisches Gebiet

Die Erfindung betrifft die Signierung und Signaturprüfung von Nachrichten unter Verwendung geheimer Schlüssel.

### Stand der Technik

Für die Fälschungssicherung von Nachrichten ist bekannt, dass mit Hilfe von symmetrischer Kryptographie eine Signatur gebildet wird, mittels derer der Empfänger mit sehr hoher Wahrscheinlichkeit prüfen kann, ob die Nachricht unverfälscht übermittelt wurde und von dem vorgegebenen Absender stammt. Voraussetzung ist jedoch, daß Absender und Empfänger über einen gemeinsamen geheimen Schlüssel verfügen, der sicher gespeichert sein muss. Ein solches Verfahren ist beispielsweise in der Patenschrift US 4,549,075 beschrieben.

Dokument WO 93/21711 beschreibt ein Verfahren zum Erkennen einer unberechtigten Wiedereinspielung bzw. Änderung beliebiger von einem Sender zu einem Empfänger übertragener Daten. Hierzu wird die den Nutzdaten zugeordnete Signatur symmetrisch unter Verwendung einer Kombination von die Kopplung zwischen Sender und Empfänger kennzeichnenden Kopplungsdaten und von einem Zufallsgenerator erzeugten Zufallsdaten verschlüsselt. Eine Änderung der übertragenen Nachricht kann dadurch erkannt werden, dass der zur Verschlüsselung der Signatur verwendete Schlüssel nicht dem bei der Entschlüsselung beim Empfänger gewonnen Schlüssel entspricht und somit die entschlüsselte Signatur zu einem falschen Ergebnis führt.

Symmetrische Kryptographie, insbesondere das DES-Verfahren, wird häufig in Chipkarten eingesetzt, weil es sehr effizient programmierbar ist. Die Chipkarten weisen ferner einen Permanentspeicher auf, in dem ein Hauptschlüssel sicher geheim gespeichert ist, der auch in einer Zentrale sicher gespeichert ist.

Soll nun eine Nachricht fälschungsgesichert von einem Absender an den Empfänger, hier die Chipkarte, gesendet werden, so muss bislang der Absender die Nachricht von der Zentrale signieren lassen, da die Zentrale den geheimen Hauptschlüssel nicht dem Absender zur Verfügung stellen kann, ohne das Gesamtsystem zu schwächen. Zudem sind Maßnahmen notwendig, damit die Nachricht bei der Übertragung von dem Absender zur Hauptstelle gegen Verfälschung und Vortäuschung eines legitimen Absenders geschützt ist.

Aufgabe der Erfindung ist es daher, ein Verfahren zur Fälschungssicherung von Nachrichten durch eine Signatur anzugeben, die von einem Absender gebildet und zu einem Empfänger gesendet werden kann, ohne daß der Absender über den geheimen Hauptschlüssel verfügt, den der Empfänger und eine Zentrale gemeinsam haben, oder die Nachricht zuvor zu der Zentrale zwecks Signaturbildung gesendet werden muß.

### Darstellung der Erfindung

Die Erfindung benutzt ein Verfahren, bei dem die Zentrale Signierschlüssel vorab bildet und dem Absender bereitstellt. Der Empfänger kann, wie genauer in den Ausführungsbeispielen beschrieben wird, den Signierschlüssel nachbilden und damit die Nachricht prüfen.

Es handelt sich um ein Verfahren zur Signierung einer Nachricht, wobei eine Zentrale und der Empfänger einen permanenten gemeinsamen Hauptschlüssel haben. Die Zentrale erzeugt vorab eine Sequenzzahl und aus dieser mittels einer Einwegfunktion einen Signierschlüssel. Beides wird gesichert dem Absender bereitstellt. Der Absender bildet mittels des Signierschlüssels eine Signatur der Nachricht und sendet sie mit Sequenzzahl und Nachricht an den Empfänger. Der Empfänger bildet mittels Einwegfunktion, Hauptschlüssel und Sequenzzahl einen Prüfschlüssel und prüft damit die Signatur der Nachricht.

Weitere Merkmale und Vorteile der Erfindung ergeben sich aus der folgenden Beschreibung, welche in Verbindung mit der beigefügten Zeichnung die Erfindung an Hand eines Ausführungsbeispiels erläutert.

### Kurzbeschreibung der Zeichnung

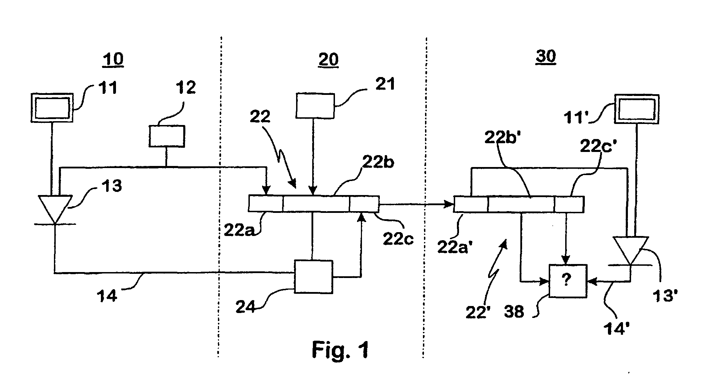

Es zeigt
- Fig. 1: ein Diagramm, in dem der Datenfluß mit den beteiligten Komponenten symbolisiert ist.

### Beschreibung mindestens einer Ausführungsform mindestens der Erfindung

In Fig. 1 sind die drei Teilnehmer an dem Verfahren, nämlich die Zentrale 10, der Absender 20 und der Empfänger 30, durch punktstrichlierte Linien getrennt, angedeutet.

Die Zentrale 10 enthält einen gesicherten Speicher 11 für einen geheimen Schlüssel, der ansonsten beispielsweise in einem symmetrischen kryptographischen Verschlüsslungs- oder Signierverfahren verwendet wird. Der Empfänger 30 enthält einen entsprechenden Speicher 11', der denselben Schlüssel enthält. Das Einschreiben dieses Schlüssels erfolgt beispielsweise in der Zentrale bei der Initialisierung, wenn es sich bei dem Empfänger 30 um eine Chipkarte handelt. Andernfalls sind aus der Kryptographie bekannte Schlüsselverteilungsverfahren anzuwenden. Dabei wird der Schlüssel nur einmal oder in sehr großen Zeitabständen gespeichert; für das Verfahren nach der Erfindung ist die Speicherung als permanent anzusehen.

Die Zentrale 10 enthält ferner einen Sequenzgenerator 12. Dieser liefert eine Reihe von jeweils unterschiedlichen Zahlen. Im einfachsten Fall ist dies eine fortlaufende Nummer. Besser ist jedoch die Verwendung eines bekannten Pseudo-Zufallszahlengenerators, z.B. nach der Modulo-Methode. Bei richtiger Wahl der Parameter liefern diese Pseudo-Zufallszahlen-Generatoren eine Folge von jeweils neuen Zahlen, bis der durch den Modulus bestimmte Zyklus durchlaufen ist. Auch können absteigende Nummern oder solche mit einer Schrittweite größer als Eins verwendet werden. Gleichfalls möglich ist die Verwendung von Datum und Uhrzeit als eindeutig Sequenznummer, gegebenenfalls als Zahl der Sekunden seit einem verabredeten Beginn.

Die Zentrale erzeugt also ein oder mehrere Sequenznummern 12. Aus einer solchen Sequenznummer 12 wird mittels des Hauptschlüssels durch einen Einweg-Verschlüssler 13 ein Signierschlüssel 14 gebildet. Dies geschieht am einfachsten, indem die Sequenznummer 12 mittels des Hauptschlüssels verschlüsselt wird. Hierbei wird eine kurze Sequenznummer durch weitere Daten auf die Blocklänge des Verschlüsslungsverfahrens aufgefüllt. Zwar sind hierzu binäre Nullen verwendbar; besser ist eine Funktion der Sequenznummer, z.B. deren Quadrat. Auch möglich ist ein konstanter Text, der nicht aus binären Nullen besteht und vertraulich gehalten wird. Da meist die Blockgröße in der Größenordnung der Schlüssellänge liegt, ist das Ergebnis als Schlüssel weiterverwendbar; gegebenfalls sind Bits aufzufüllen oder durch Faltung die Bitzahl zu reduzieren.

Wesentliche Eigenschaft des Einweg-Verschlüsslers ist es, daß ein Rückschluß auf den Hauptschlüssel praktisch nicht möglich ist. Obwohl die soeben beschriebene Methode keine Einweg-Verschlüsslung ist, weil z.B. der Empfänger durch Dechiffiriern aus dem Signierschlüssel die Sequenzzahl bilden könnte, ist die "Einweg"-Funktionalität wesentlich.

Daher werden in anderen Ausführungsformen andere Einweg-Funktion verwendet, die Hauptschlüssel und Sequenznummer reproduzierbar zu einem Signierschlüssel verknüpfen, ohne daß jemand ohne den Hauptschlüssel zu einer gegebenen Sequenznummer einen gültigen Signierschlüssel bzw. umgekehrt bilden oder aus dem Signierschlüssel und der Sequenznummer den Hauptschlüssel bestimmen kann. Solche Verfahren werden allgemein als "Message Authentication Codes" (MAC) bezeichnet. Ein solcher kann insbesondere durch eine beliebige, kryptographisch sichere Einweg-Funktion auf eine Kombination von Hauptschlüssel und Sequenznummer gebildet werden. Als Kombination sind u.a. Konkatenation, Exklusiv-Oder, Multiplikation mit oder ohne Modulobildung, Addition möglich.

Die Zentrale 10 stellt also ein oder mehrere Paare von Sequenznummer 12 und daraus erzeugtem Signierschlüssel 14 bereit. Dies kann z.B. Ausdrucken auf Sicherheitspapier, durch Einspeichern in eine weitere Chipkarte oder durch sonstige gesicherte Datenübermittlung geschehen. Diese Paare werden dem Absender 20 vorab zur Verfügung gestellt und müssen von diesem gesichert und vertraulich gespeichert werden.

Der Absender 20, der eine Nachricht 21 an den Empfänger 30 senden möchte, entnimmt ein Paar von Sequenznummer 12 und Signierschlüssel 14 und bestimmt die Signatur der Nachricht 21 mittels des Signieres 24. Bevorzugt wird auch hierbei das DES-Verfahren, z.B. nach ANSI X9.9, verwendet. Alternativ kann eine Signatur durch eine Kombination einer kryptographischen Hash-Funktion mit einem "message authentication code" erzeugt werden. Verfahren hierzu sind in der kryptographischen Literatur vielfach und ausführlich beschrieben.

Sodann bildet der Absender einehDatensatz 22, der drei Felder mit der Sequenznummer 22a, der Nachricht 22b und der Signatur 22c enthält. Der soeben verwendete Signierschlüssel 14 wird gelöscht.

Nunmehr wird der Datensatz 22 zu dem Empfänger 30 übertragen, welcher damit einen Datensatz 22' erhält, der wiederum drei Felder enthält, die als Sequenznummer 22a', Nachricht 22b' und Signatur 22c' angesehen werden. Üblicherweise wird dieser Datensatz bereits von anderen Sicherungs- oder Plausibilitäts-Mechanismen gegen Übertragungsfehler gesichert.

Der Empfänger extrahiert aus dem empfangenen Datensatz 22' die Sequenznummer 22a' und führt diese zusammen mit dem Hauptschlüssel 11' einer Einweg-Verschlüsslung 13' zu, die dieselbe wie die Einweg-Verschlüsslung 13 in der Zentrale 10 bzw. dazu funktionsgleich ist. Am Ausgang der Einweg-Funktion entsteht ein Prüfschlüssel 14'. Dieser ist, wenn die Sequenznummer korrekt übertragen wurde, gleich dem Signierschlüssel 14, den der Absender 20 verwendet hat. Der Prüfschlüssel 14' wird zusammen mit der eingetroffenen Nachricht 22b' und der eingetroffenen Signatur 22c' einem Signaturprüfer 38 zugeführt wird. Passen alle drei zueinander, erzeugt der Signaturprüfer 38 an seinem Ausgang ein Freigabesignal für die Weiterverwendung der Nachricht. Der Prüfschlüssel 14' wird, unabhängig von dem Ergebnis, mit Abschluß der Prüfung vernichtet.

In einer Weiterbildung der Erfindung führt der Empfänger eine Liste bereits benutzter Sequenzzahlen und weist Nachrichten mit bereits verwendeten Sequenzzahlen ab. Damit ist eine zusätzliche Sicherheit gegen Mißbrauch gegeben.

Da die die Sequenzzahl bevorzugt durch einen deterministischen Generator erzeugt wird, kann die Übermittlung der Sequenzzahl entfallen. Da ohnehin der gemeinsame Hauptschlüssel in gesicherter Umgebung an den Empfänger übertragen werden muß, kann zugleich der Anfangswert des Generators übertragen werden. Mit jeder empfangenen Nachricht erzeugt der Empfänger einen neuen Wert für die Sequenzzahl und bildet damit den Prüfschlüssel 14', ohne daß die Sequenzzahl mit übertragen werden muß. Um robust gegenüber Doppelübertragungen und verlorene Nachrichten zu sein, wird dann zweckmäßig auch einer der letzten und folgenden Sequenzzahlen mit verwendet werden. Auch hier kann die Zentrale dem Absender mehrere Signierschlüssel 14 bereitstellen, die dann vom Absender in der vorgegebenen Reihenfolge verwendet werden sollen.

Eine mögliche Anwendung der Erfindung liegt auf dem Gebiet der Geldausgabeautomaten. Die Zentrale ist dabei die Bankenzentrale, die für die Prüfung der PIN einen Hauptschlüssel verwendet und an den Hersteller von Geldautomaten in der Zentrale personalisierte Prüfmoduln liefert. Als Absender kommt ein Hersteller oder eine lokale Bankenorgansation in Betracht, die beispielsweise einen Umrechnungskurs oder einen Rabattsatz in den Geldausgabeautomaten laden möchte; aber weder einen eigenen geheimen Schlüssel in den Geldautomaten einbrigen kann noch einen eigenen Sicherheitsmodul einbauen möchte.

Falls kein nichtflüchtiger Speicher im Empfänger vorhanden ist, kann der Empfänger auch die Sequenzzahlen von Anfang erzeugen und mit jeder die Signatur verproben. Der Verlust an Sicherheit ist dabei gering, jedoch ist keine Sicherhiet gegen Doppelbenutzung gegeben.

## Patentansprüche

1. Verfahren zur Signierung einer Nachricht (22) durch einen Absender (20) und Prüfung der Signatur durch einen Empfänger, wobei eine Zentrale (10) und ein Empfänger (30) über einen geheimen gemeinsamen Hauptschlüssel (11, 11') verfügen, mit den Merkmalen:
- Die Zentrale (10)
* erzeugt eine Sequenzzahl (12) und
* aus dieser unter Verwendung des Hauptschlüssels (11) mittels einer Einweg-Verschlüsslung (13) einen Signierschlüssel (14) und
* stellt dem Absender den Signierschlüssel (14) bereit;
- der Absender (20)
* bildet mittels des Signierschlüssels (14) eine Signatur (22c) über die Nachricht (21, 22c) und
* sendet an den Empfänger einen Nachrichtensatz (22), der zumindest die Nachricht (22b) und die Signatur (22c), enthält;
- der Empfänger (30)
* bestimmt die Sequenzzahl (22a'),
* bildet mittels der Einweg-Verschlüsslung (13') und dem Hauptschlüssel (11') einen Prüfschlüssel (14') und
* prüft damit die Signatur (22c) der Nachricht.

2. Verfahren nach Anspruch 1, wobei die Sequenzzahl (12, 22a, 22a') zusammen mit dem Signierschlüssel (14) von der Zentrale an den Absender (20) übergeben und von diesem über den Datensatz (22, 22') an den Empfänger übergeben wird.

3. Verfahren nach Anspruch 1, wobei die Sequenzzahl (12) durch einen Generator synchron zu der Anzahl der verwendeten Signier- bzw. Prüfschlüssel in der Zentrale (10) und bei dem Empfänger erzeugt wird.

4. Verfahren nach Anspruch 1, wobei die Sequenzzahl (12) durch einen Generator synchron zu der Anzahl der verwendeten Signier- bzw. Prüfschlüssel in der Zentrale (10) und bei dem Absender erzeugt und über den Datensatz (22, 22') an den Empfänger übergeben wird.

5. Verfahren nach einem der vorhergehenden Ansprüche, wobei die Sequenzzahl durch einen Generator für Pseudo-Zufallszahlen erzeugt wird.

6. Verfahren nach einem der vorhergehenden Ansprüche, wobei als Einweg-Verschlüsslung die Verschlüsselung der Sequenzzahl mittels des Hauptschlüssels verwendet wird.

7. Verfahren nach einem der vorhergehenden Ansprüche, wobei die Zentrale (10) vorab mehrere Signierschlüssel (14) erzeugt und diese, sofern zweckmäßig, gemeinsam mit den zugehörigen Sequenzzahlen (12), an den Absender (30) übermittelt.

8. Verfahren nach einem der vorhergehenden Ansprüche, wobei der Empfänger (30) eine Liste bereits verwendeter Sequenzzahlen führt und bereits verwendete Sequenzzahlen abweist.

9. Einrichtung zur Signierung einer Nachricht (22, 22'), die von einem Absender (20) an einen Empfänger (30) geschickt wird, mit den Merkmalen:
- Eine Zentrale (10) und der Empfänger (30) verfügen über einen ersten und zweiten Speicher für einen geheimen gemeinsamen Hauptschlüssel (11, 11');
- in der Zentrale (10) ist ein erster Einweg-Verschlüssler (13) an einem Eingang mit dem ersten geschützten Speicher (11), an einem anderen Eingang mit einem Generator (12) für eine Sequenzzahl verbunden,
- der Ausgang des Einweg-Verschlüsslers (13) ist über ein Transportmedium mit dem Absender (20) verbunden,
- beim Absender ist ein Signatur-Generator (24) vorgesehen, dessen Eingänge mit dem Ausgang des Einweg-Verschlüsslers und der zu signierenden Nachricht (21, 22b) verbunden sind,
- der Ausgang des Signatur-Generators (24) ist mit einer Einrichtung verbunden, die mindestens die Signatur (22c) und die Nachricht (22b) zu einem Nachrichtenblock (22) assembliert und deren Ausgang über ein Transportmedium mit dem Empfänger (30) verbunden ist,
- im Empfänger ist ein Signatur-Prüfer (22') vorgesehen, an dessen Eingänge einerseits mit der Nachricht (22b') und der Signatur (22c') des über das Transportmedium eingetroffenen Nachrichtenblocks (22'),
- andererseits mit dem Ausgang eines zweiten Einweg-Verschlüsslers (13') verbunden ist, dessen Eingänge einerseits mit dem zweiten Speicher (11') für den geheimen Hauptschlüssel und mit einem Mittel zur Bereitstellung einer Sequenznummer (22a') verbunden ist.

10. Einrichtung nach Anspruch 9, wobei ein Generator die Sequenzzahl (22a') nach einem deterministischen Verfahren ein oder meherere Sequenzzahlen entsprechend der Anzahl der Prüfungen erzeugt.

## Claims

1. Method for signing a message (22) by a sender (20), and for checking the signature by a receiver, wherein a control centre (10) and a receiver (30) have a secret, common main key (11, 11'), having the following features:
- the control centre (10)
* produces a sequence number (12) and
* from this and using the main key (11) produces a signing key (14) by means of one-time encryption (13), and
* provides the sender with the signing key (14);
- the sender (20)
* uses the signing key (14) to form a signature (22c) for the message (21, 22c) and
* sends to the receiver a message set (22) which contains at least the message (22b) and the signature (22c);
- the receiver (30)
* determines the sequence number (22a'),
* forms a check key (14') using the one-time encryption (13') and the main key (11'), and
* uses this to check the signature (22c) on the message.

2. Method according to Claim 1, wherein the sequence number (12, 22a, 22a') is transmitted together with the signing key (14) from the control centre to the sender (20), and is transmitted from the sender (20) via the data set (22, 22') to the receiver.

3. Method according to Claim 1, wherein the sequence number (12) is produced by a generator in synchronism with the number of signing and check keys used in the control centre (10) and in the receiver.

4. Method according to Claim 1, wherein the sequence number (12) is produced by a generator in synchronism with the number of signing and check keys used in the control centre (10) and in the sender, and is transmitted via the data set (22, 22') to the receiver.

5. Method according to one of the preceding claims, wherein the sequence number is produced by a pseudo-random number generator.

6. Method according to one of the preceding claims, wherein the encryption of the sequence number by means of the main key is used as the one-time encryption.

7. Method according to one of the preceding claims, wherein the control centre (10) produces a number of signing keys (14) in advance, and transmits them to the sender (30), if expedient, together with the associated sequence numbers (12).

8. Method according to one of the preceding claims, wherein the receiver (30) maintains a list of already used sequence numbers, and rejects already used sequence numbers.

9. Device for signing a message (22, 22') which is sent from a sender (20) to a receiver (30), having the following features:
- a control centre (10) and the receiver (30) have a first and a second memory for a secret, common main key (11, 11');
- in the control centre (10), one input of a first one-time encrypter (13) is connected to the first protected memory (11), and another input is connected to a generator (12) for a sequence number,
- the output of the one-time encrypter (13) is connected to the sender (20) via a transport medium,
- a signature generator (24) is provided in the sender, and its inputs are connected to the output of the one-time encrypter and to the message (21, 22b) to be signed,
- the output of the signature generator (24) is connected to a device which assembles at least the signature (22c) and the message (22b) to form a message block (22) and whose output is connected to the receiver (30) via a transport medium,
- a signature checker (22') is provided in the receiver, whose inputs are connected firstly to the message (22b') and to the signature (22c) of the message block (22') which has arrived via the transport medium,
- and secondly to the output of a second one-time encrypter (13'), whose inputs are connected firstly to the second memory (11') for the secret main key and to a means for providing a sequence number (22a').

10. Device according to Claim 9, wherein a generator produces the sequence number (22a') using a deterministic method, produces one or more sequence numbers corresponding to the number of checks.

## Revendications

1. Procédé de signature d'un message (22) par un émetteur (20) et de vérification de la signature par un récepteur, un central (10) et un récepteur (30) disposant d'une clé principale commune secrète (11, 11'), avec les caractéristiques suivantes :
- le central (10)
* produit un numéro de séquence (12) et
* une clé de signature (14) à partir de celui-ci en utilisant la clé principale (11) au moyen d'un dispositif de cryptage à sens unique (13) et
* fournit la clé de signature (14) à l'émetteur ;
- l'émetteur (20)
* forme au moyen de la clé de signature (14) une signature (22c) sur le message (21, 22b) et
* envoie au récepteur un bloc de message (22) qui contient au moins le message (22b) et la signature (22c) ;
- le récepteur (30)
* détermine le numéro de séquence (22a'),
* forme une clé de vérification (14') au moyen du dispositif de cryptage à sens unique (13') et de la clé principale (11') et
* vérifie avec cette clé de vérification la signature (22c) du message.

2. Procédé selon la revendication 1, dans lequel le numéro de séquence (12, 22a, 22a') est transmis conjointement à la clé de signature (14) du central à l'émetteur (20) et est transmis de celui-ci au récepteur par l'intermédiaire du bloc de données (22, 22').

3. Procédé selon la revendication 1, dans lequel le numéro de séquence (12) est produit par un générateur en synchronisation avec le nombre des clés de signature ou de vérification utilisées dans le central (10) et dans le récepteur.

4. Procédé selon la revendication 1, dans lequel le numéro de séquence (12) est produit par un générateur en synchronisation avec le nombre des clés de signature ou de vérification utilisées dans le central (10) et dans le récepteur et est transmis au récepteur par l'intermédiaire du bloc de données (22, 22').

5. Procédé selon l'une des revendications précédentes, dans lequel le numéro de séquence est produit par un générateur de nombres pseudo-aléatoires.

6. Procédé selon l'une des revendications précédentes, dans lequel on utilise comme dispositif de cryptage à sens unique le cryptage du numéro de séquence au moyen de la clé principale.

7. Procédé selon l'une des revendications précédentes, dans lequel le central (10) produit à l'avance plusieurs clés de signature (14) et transmet celles-ci à l'émetteur (20), dans la mesure où c'est judicieux, conjointement aux numéros de séquence associés (12),

8. Procédé selon l'une des revendications précédentes, dans lequel le récepteur (30) gère une liste de numéros de séquence déjà utilisés et rejette des numéros de séquence déjà utilisés.

9. Dispositif de signature d'un message (22, 22') envoyé par un émetteur (20) à un récepteur (30), avec les caractéristiques suivantes :
- un central (10) et le récepteur (30) disposent d'une première et d'une deuxième mémoire pour une clé principale commune secrète (11, 11');
- dans le central (10), un premier dispositif de cryptage à sens unique (13) est relié par une entrée à la première mémoire protégée (11) et par une autre entrée à un générateur (12) destiné à produire un numéro de séquence ;
- la sortie du dispositif de cryptage à sens unique (13) est reliée par l'intermédiaire d'un moyen de transmission à l'émetteur (20);
- dans l'émetteur, il est prévu un générateur de signature (24) dont les entrées sont reliées à la sortie du dispositif de cryptage à sens unique et au message à signer (21, 22b) ;
- la sortie du générateur de signature (24) est reliée à un dispositif qui assemble au moins la signature (22c) et le message (22b) en un bloc de message (22) et dont la sortie est reliée par l'intermédiaire d'un moyen de transmission au récepteur (30) ;
- dans le récepteur, il est prévu un vérificateur de signature (22') dont les entrées sont reliées d'une part au message (22b') et à la signature (22c') du bloc de message (22') arrivé par le moyen de transmission
- et d'autre part à la sortie d'un deuxième dispositif de cryptage à sens unique (13') dont les entrées sont reliées d'une part à la deuxième mémoire (11') destinée à la clé principale secrète et d'autre part à un moyen destiné à la préparation d'un numéro de séquence (22a').

10. Dispositif selon la revendication 9, dans lequel un générateur destiné à produire le numéro de séquence (22a') produit selon un procédé déterministe un ou plusieurs numéros de séquence en fonction du nombre des vérifications.
